# EUROPEAN PATENT SPECIFICATION

(11) **EP 3 880 554 B1**
(45) Date of publication and mention of the grant of the patent: **13.09.2023**
(21) Application number: 18808405.7
(22) Date of filing: 15.11.2018
(51) Int. Cl.: B64C 39/02

(54) **AN UNMANNED AERIAL VEHICLE AND A CHARGING PLATFORM FOR AN UNMANNED AERIAL VEHICLE**
UNBEMANNTES FLUGZEUG UND LADEPLATFORM FÜR EIN SOLCHES FLUGZEUG
VÉHICULE AÉRIEN SANS PILOTE ET PLATEFORME DE CHARGE POUR UN TEL VÉHICULE

(43) Date of publication of application: 22.09.2021
(73) Proprietor: Nokia Technologies Oy, 02610 Espoo (FI)
(72) Inventor: LITJENS, Stephan, 00160 Helsinki (FI)
(74) Representative: Swindell & Pearson Limited
(86) International application number: PCT/FI2018/050836
(87) International publication number: WO 2020/099711

(56) References cited:
- EP-A1- 3 326 912
- KR-A- 20170 083 856
- US-A1- 2015 158 598
- US-A1- 2016 039 541
- US-A1- 2018 237 161

## Description

### TECHNOLOGICAL FIELD

Embodiments of the present invention relate to unmanned aerial vehicles and charging platforms for unmanned aerial vehicles.

### BACKGROUND

Unmanned aerial vehicles, also known as drones, are aerial vehicles that can be controlled remotely, without the need for an on-board human pilot.

An unmanned aerial vehicle (UAV) can be used for many different applications. For example, in a surveying application, they may be used to take aerial photographs. For example, in a logistics application, they may be used for picking up or delivering payloads.

At least some UAVs use electrical propulsion systems and therefore carry a battery for providing the electrical energy for the systems. The range of a UAV may therefore be dependent upon a capacity of an on-board battery. However, increasing capacity of a battery will also increase its mass, decreasing the efficiency of the UAV. There is therefore a choice to be made concerning an appropriate size of battery and how often charging of the battery should occur.

It is often desirable to have charging platforms where the electrical energy of the UAV is replenished. In some applications this is achieved by replacing the battery of the UAV with a new battery.

Current charging platform are large, complex, and expensive. This can adversely affect the number and density of charging platforms.

Some charging platforms require a precise alignment of the UAV and platform. This creates a requirement for a very accurate landing. Accurate sensors and feedback control loops can be used enable more accurate autonomous landing of the UAV. However, this also increases the cost of the charging platform.

US2016/039541 discloses a method of docking and recharging a quad-rotor. The quadrotor carries a cruciform frame beneath it, which is configured to interface with a base station to enable charging. The base station has a sloped receiving surface that may be arranged in a crown pattern to passive gravity-driven centering, which causes the docking station mating frame to slide to a lowest vertical point on a receiving assembly.

US2015/158598 discloses an unmanned flying vehicle. The vehicle has a charging terminal mounted under the body of the vehicle, in which the charging terminal engages with a power supply terminal of a control tower, for charging purposes. The control tower includes a landing guide that generates a landing guide signal to land the vehicle on a motion portion of the control tower, to charge the vehicle.

EP3326912 discloses an unmanned aerial vehicle, comprising a main body and flight arms. Each flight arm comprises a rotor. A skid is attached underneath each arm. When landed on a docking station, the unmanned aerial vehicle may be charged via electrical connections in the skids.

KR20170083856 discloses an electrically powered unmanned aerial vehicle that may be charged when on a base station. The unmanned aerial vehicle carries a guide rod beneath it, which aids controlled location of the unmanned aerial vehicle on the base station, permitting charging.

US2018/237161 discloses an unmanned aerial vehicle, which uses image recognition of an alignment graphic on a docking station to land the unmanned aerial vehicle in a determined orientation on the docking station. Once it has landed, the UAV may be charged by contact between electrical contacts of the UAV and the docking station.

### BRIEF SUMMARY

According to claim 1, there is provided an unmanned aerial vehicle (UAV) comprising:
an electrical propulsion system comprising rotors;
a battery for powering the electrical propulsion system;
charging circuitry for charging the battery;
a housing comprising a first plurality of arms extending outwardly from the housing for supporting the UAV on a charging platform that is smaller than the UAV, wherein the rotors of the electrical propulsion system (102) are attached at the extremities of the arms,
wherein the charging circuitry is configured to be charged using at least some of a plurality of contact charging pads, and wherein at least some of the plurality of contact charging pads are positioned on at least some of the first plurality of arms and extend over at least an underside portion of those arms.

Additional features of the unmanned aerial vehicle are disclosed in dependent claims 2-11.

According to claim 12, there is provided a system comprising:
the unmanned aerial vehicle of claim 1 and
a charging platform for at least the unmanned aerial vehicle, the charging platform being smaller than the UAV and comprising:
   a horizontal frame, bounding an interior void, configured to support outwardly extending arms of a UAV that has landed on the charging platform;
   a second plurality of contact charging pads for enabling charging of the UAV, wherein each of the second plurality of contact charging pads is positioned on the frame and extends over at least an upper portion of the charging frame.

### BRIEF DESCRIPTION

Some example embodiments will now be described with reference to the accompanying drawings in which:
FIG. 1 shows an example embodiment of the subject matter described herein;
FIG. 2A and 2B shows another example embodiment of the subject matter described herein;
FIG. 3A, 3B, 3C show example embodiments of the subject matter described herein;
FIG. 4 shows another example embodiment of the subject matter described herein;
FIG. 5 shows another example embodiment of the subject matter described herein;
FIG. 6 shows another example embodiment of the subject matter described herein;
FIG. 7A and 7B show another example embodiment of the subject matter described herein; and
FIG. 8A, 8B and 8C show example embodiments of the subject matter described herein.

### DEFINITIONS

An unmanned aerial vehicle (UAV) is an aircraft without a human pilot aboard;
yaw axis, pitch axis and roll axis are mutually orthogonal axes;
yaw is rotation about the yaw axis;
pitch is rotation about the pitch axis;
roll is rotation about the roil axis.

### DETAILED DESCRIPTION

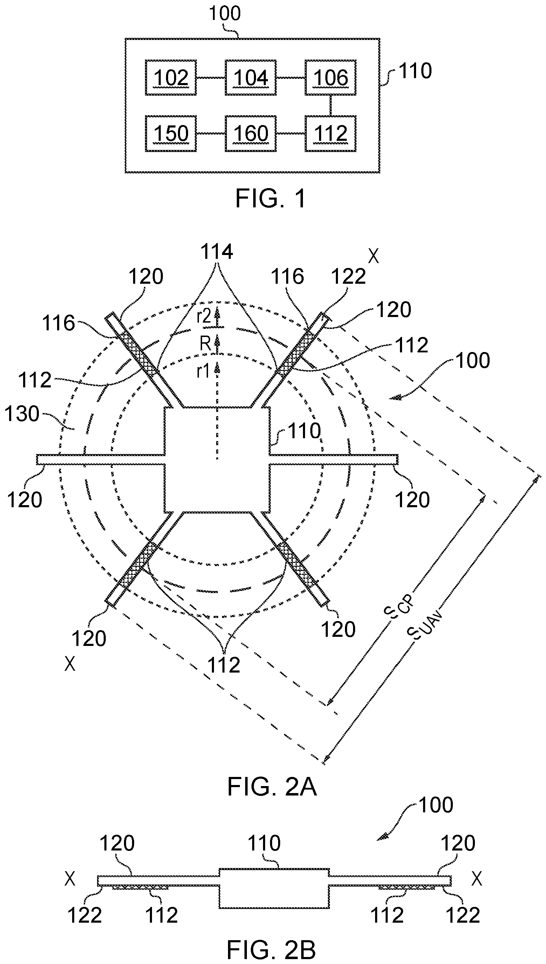

FIG 1 illustrates an example of an unmanned aerial vehicle (UAV) 100. In this example, the UAV 100 comprises an electrical propulsion system 102, a battery 104 for powering the electrical propulsion system 102, charging circuitry 106 for charging the battery 104, and a housing 110. The UAV 100 also comprises contact charging pads 112 and the charging circuitry 106 is configured to be charged using at least some of the plurality of contact charging pads 112.

The UAV 100 may be of any suitable size. In the example illustrated, the UAV 100 carries a payload 150. The payload 150 provides a function or is for delivery. Examples of functions that the payload 150 may perform include, but are not limited to, remote sensing. The payload 150 may for example be a camera.

The electrical propulsion system 102 is used to create lift and to provide for maneuverability of the UAV 100. The electrical propulsion system 102 comprises multiple rotors.

The multiple rotors may be configured in a counter-rotation arrangement to minimize net rotational torque on the UAV 100. In some examples, maneuverability of the UAV 100 may be provided by changing an axis of rotation of one or more of the rotors.

The battery 104 is any suitable battery for powering the electrical propulsion system 102. It may be desirable to use batteries that have a high ratio of storage capacity to mass. Current examples of such batteries include lithium ion and polymer lithium ion batteries. In order to increase capacity, the battery 104 will typically include multiple cells.

The charging circuitry 106 is configured to charge the battery 104 and will, therefore, depend upon the type of battery used. The charging circuitry 106 controls current transfer between the charging platform and the battery 104 via the contact charging pads 112.

In order for charging to take place, the contact charging pads 112 of the UAV 100 need to be aligned with corresponding contact charging pads of a charging platform (not illustrated in this figure). If the landing of the UAV 100 on the charging platform is sub-optimal, then there may be misalignment between the contact charging pads 112 of the UAV 100 and corresponding contact charging pads of the charging platform.

In some, but not necessarily all, examples, the UAV 100 comprises sensor circuitry 160 for detecting a landing of the UAV 100 on a charging platform. The sensor circuitry 160 may be configured to detect a relationship between the UAV 100 and the charging platform that is sub-optimal for charging and may be configured to cause a change in the relationship between the UAV 100 and the charging platform to enable charging.

For example, in one implementation, the sensor circuitry 160 may detect a sub-optimal landing and consequently cause the UAV 100 to take off and re-land. In this example, the physical relationship between the UAV 100 and the charging platform is changed by re-landing the UAV 100.

In other examples, the sensor circuitry 160 may control the charging circuitry 106 to select a particular one of the plurality of contact charging pads 112 as a positive charging terminal for the battery 104 and to select a particular different one of the plurality of charging pads 112 as a negative charging terminal for the battery 104. The sensor circuitry 106, in this example, is configured to detect a voltage at each charging pad 112 and to consequently select a pair of contact charging pads 112 for completing the charging circuit for the battery 104. In this example, the electrical relationship between the UAV 100 and the charging platform is changed to enable optimal charging.

FIGS 2A and 2B illustrate an example of a UAV 100, for example a UAV 100 as described with reference to and as illustrated in FIG 1. FIG 2A is a plan view of a UAV from below along a yaw axis. FIG 2B is a cross-sectional view of the UAV along the cross-section X-X, illustrated in FIG 2A. The housing 110 of the UAV 100 comprises a first plurality of arms 120 extending outwardly from the housing 110. The first plurality of arms 120 are configured to support the UAV 100 on a charging platform that is smaller than the UAV 100.

In the examples illustrated, the first plurality of arms 120 extend from a central hub outwardly in a radial direction towards extremities. The outward direction is from the central hub towards the extremities. In the examples illustrated the arms 120 are rod-like structures. However in other examples they may have different configurations and may, for example, be formed by loop structures. The arms 120 are sufficiently stiff to be able to support the weight of the UAV 100 when the UAV 100 has landed on the charging platform. In some examples, the arms 120 are fixed, rigid arms.

As can be seen from the example of FIG 2B, the arms 120, in this example, extend outwardly in a horizontal plane orthogonal to the yaw axis.

As can be seen from the particular example of FIG 2A, the arms 120 have rotational symmetry for rotation of the arms within the horizontal plane about the yaw axis. In the example illustrated there are N arms that are separated by an angle of 360°/N. The specific example illustrates six arms that lie in a flat horizontal plane each separated by 60°. However, in other examples the arms 120 do not necessarily have rotational symmetry.

As can be appreciated from FIGS 2A and 2B, at least some of the plurality of contact charging pads 112 are positioned on at least some of the first plurality of arms 120. The contact charging pads 112 positioned on the arms 120 extend over at least an underside portion 122 of those arms 120.

In this example, as can be seen from FIG 2A, a span S_{UAV} of the arms 120 exceeds a span S_{CP} of the charging platform. The UAV 100 is therefore larger than the charging platform on which it lands. Larger than in this context means that the horizontal, maximum dimension of the UAV (the span S_{UAV}) is greater than a horizontal, maximum dimension (span S_{CP}) of the charging platform. In this example, in the horizontal, the maximum dimensions of the UAV 100 along each of the arms 120 is greater than the maximum dimension of the charging platform. Thus the area of the UAV 100 is greater than the area of the charging platform. In this context, the horizontal is the plane in which yaw is measured, that is the plane orthogonal to the yaw axis.

Each of the plurality of contact charging pads 112 is positioned on one of the first plurality of arms and extends over at least an underside portion 122 of that arm 120. In this example, all the contact charging pads 112 of the UAV 100 are positioned only on arms 120. There is no contact charging pad 112 that is not positioned on an arm 120. There is, for example, no contact charging pad 112 at the hub where the arms 120 meet.

In order to have tolerance in relation to the landing of the UAV 100 on the charging platform, the contact charging pads 112 are sized to provide tolerance. The contact charging pads 112 are sized and positioned, in this example, to form discreet portions in the yaw direction, in the horizontal, and to form extended portions orthogonal to the yaw direction, in the horizontal. In the illustrated example, the contact charging pads 112 are sized and positioned, in this example, to form discreet portions of a virtual anulus 130. The portions are discreet in the circumferential direction. Inner portions 114 of the contact charging pads 112 are located at an inner radius r1 of the virtual anulus 130. Outer portions 116 of contact charging pads 112 are located at an outer radius r2 of the virtual anulus 130. The inner radius r1 of the virtual anulus 130 is less than a radius R of the charging platform and the outer radius r2 is greater than the radius R of the charging platform.

In some, but not necessarily all, examples, some or all of the contact charging pads 112 have an abrasive conductive surface. The abrasive conductive surface makes contact with a corresponding abrasive conductive surface of the charging platform when the UAV 100 lands on the charging platform. Relative movement of the UAV 100 with respect to the charging platform produces friction between the respective abrasive surfaces and helps ensure good electrical contact.

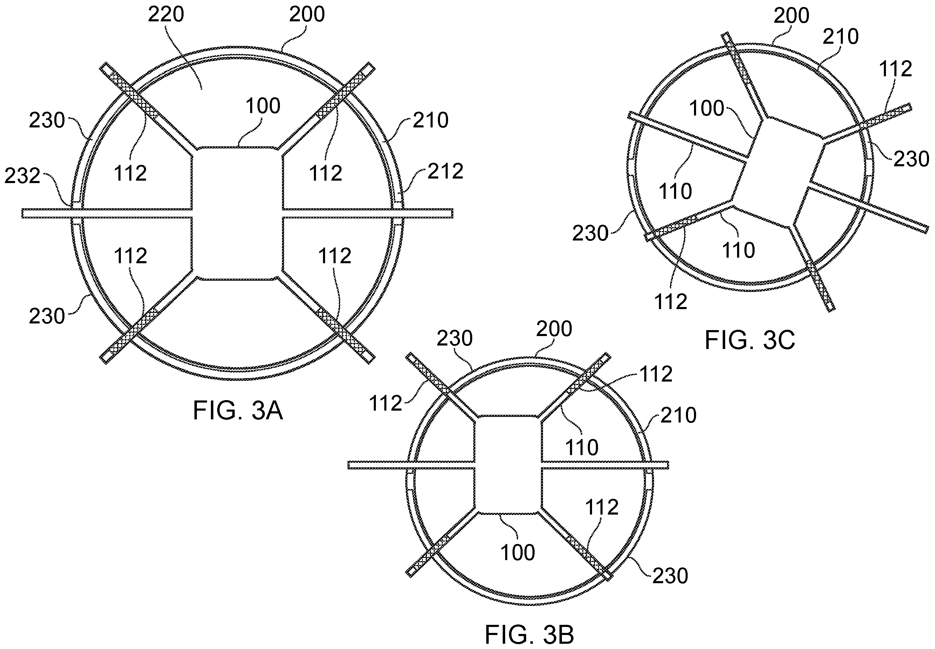

FIGS 3A, 3B and 3C illustrate examples of a charging platform 200 on which a UAV 100 has landed.

The charging platform 200 comprises an exterior frame 210, bounding an inner void 220. The exterior frame 210 is configured to support the outwardly extending arms 120 of a UAV 100 that has landed on the charging platform 200. The UAV 100 is larger than the charging platform 200.

The charging platform 200 comprises a plurality of contact charging pads 230 separated by gaps 232. The plurality of contact charging pads 230 are used to charge the UAV 100 when it has landed on the charging platform 200. Each of the plurality of contact charging pads 230 is positioned on the frame 210 and extends over at least an upper portion 212 of the charging frame 210.

In the example illustrated, the exterior frame 210 is a circular or annular frame. The frame 210 is bounded by two concentric circles of different radius, an inner radius r1 and an outer radius r2. It therefore forms an open-centered ring. The interior void 220 within the annular frame 210 provides for better wind performance when landing the UAV 100. The contact charging pads 230 of the charging platform 200 are, in this example, located at a radius R intermediate between the radius r1 and the radius r2.

In each of FIGS 3A, 3B and 3C the UAV 100 has a different relative position compared to the charging platform 200. However, in each of the examples illustrated the contact charging pads 112 of the UAV make contact with contact charging pads 230 of the charging platform 200. It will therefore be appreciated that despite the different relative positionings between the UAV 100 and the charging platform 200, the UAV 100 is supported securely by the charging platform 200 via the arms 120 of the UAV 100 that contact the frame 210 of the charging platform 200 and also that despite the different relative positionings between the UAV 100 and the charging platform 200, charging of the UAV 100 can still occur.

It will therefore be appreciated that the relative sizing of the UAV 100 to the charging platform 200 enables the UAV to be properly supported and properly charged, despite a lack of accuracy in the landing of the UAV 100. This means that the skill of the operator may be less and/or the time required for landing may be less and/or landing can occur in more unfavorable weather conditions such as during wind. This therefore enables the landing and charging of UAVs 100 without the need for very sophisticated autonomous landing systems and sensing systems.

The charging platform 200 is configured to accommodate various inaccuracies in the landing procedure, such as off-center positioning, and off-horizontal pitch or roll. The charging platform 200 can be configured to be agnostic to yaw. This may, for example, be achieved by communicating with the UAV 100 to determine the respective polarities of the contact charging pads 230 of the charging platform 200.

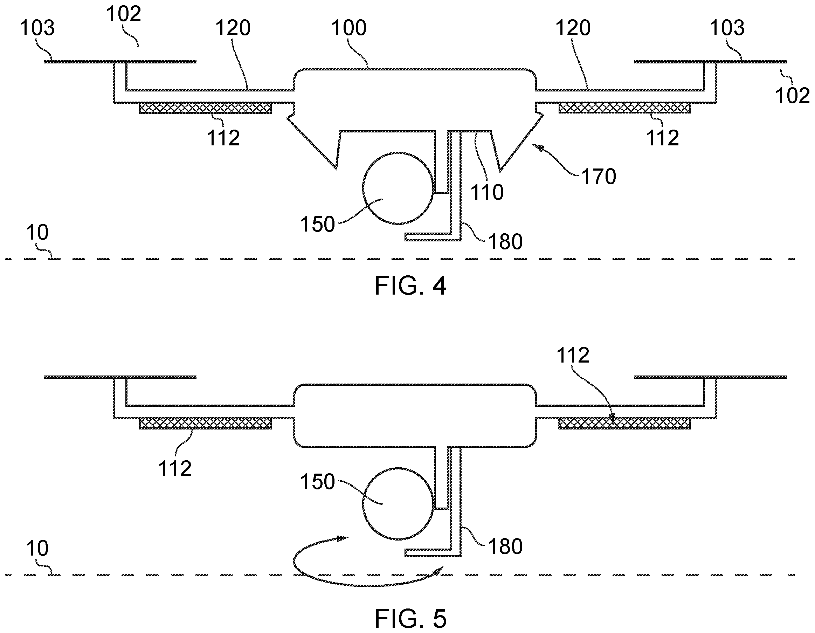

FIG 4 illustrates an example of a UAV 100 similar to that previously described. It will be noted that, in the claimed example, the rotors 103 of the electrical propulsion system 102 are attached at the extremities of the arms 120.

The figure illustrates a horizontal plane 10. This plane represents the plane in which yaw of the UAV 100 is measured. It is orthogonal to the yaw axis. Deviation from this flat plane will be as a result of pitch or roll. It can be seen that the UAV 100 in this example is in level flight and the plane defined by the arms 120 of the UAV 100 is horizontal and parallel to the horizontal plane 10. The orientation illustrated is the orientation of the UAV 100 when it is stationary in level flight and is the same when the UAV 100 has landed on the charging platform 200.

The UAV 100 has a portion or portions 170, 180 that extend below the contact charging pad 112, closer to the ground, when on the charging platform 200 that prevents the UAV 100 sliding off the charging platform 200.

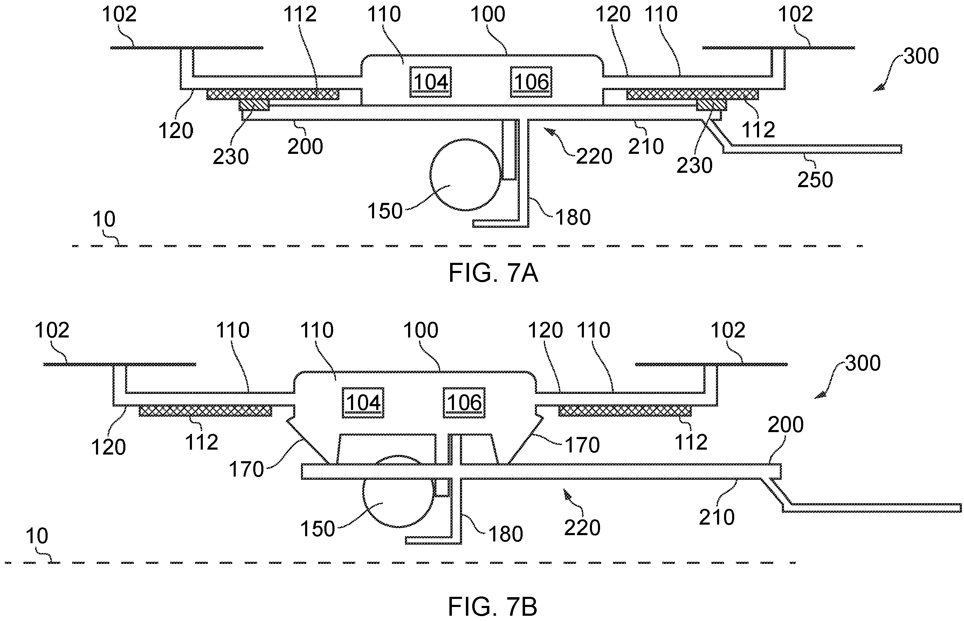

As further illustrated in FIGS 7A, 7B, the portion 170, 180 is configured to be received within the void 220 of the charging platform 200. The reception of the portion 170, 180 within the void 220 prevents the UAV 100 sliding off the charging platform 200.

As illustrated in FIG 4, the portion 170 is a mechanical landing guide that extends from the housing 110 of the UAV 100. The mechanical landing guide 170 provides a slanted surface that slants downwardly and inwardly. If the mechanical landing guide 170 makes contact with the frame 210 of the charging platform 200, for example as a consequence of gravitational acceleration, then a reaction force is generated on the UAV 100 that pushes the UAV 100 away from the frame 210. The funnel-shape of the mechanical landing guide 170 therefore provides a ramp for abutment with the frame 210 of the charging platform 200 that locates the UAV 100 relative to the charging platform 200. This process is illustrated in FIG 7B.

In the example of FIG 4 and FIG 5, the portion 180 is a payload protector. It provides protection for the payload 150. It will be noticed that the payload protector 180, in this example, is a single downwardly-protruding protector. The UAV 100 does not comprise supporting legs for supporting the UAV 100 if it lands away from the charging platform 200. The payload protector 180 provides protection for the payload 150 should the UAV 100 land away from the charging platform 200. However, the payload protector 180 does not provide landing supports for the UAV 100 and does not function as legs but only provides protection for the payload 150.

In the example illustrated in FIG 5, the payload protector 180 is configured to be moveable in the horizontal plane 10. The payload protector 180 may be mounted on a gimbal to enable rotation of the payload protector about the payload 150. In the example illustrated, the payload 150 is a camera with one or more lenses that define a field of view. The payload protector 180 is moved so that it remains outside the field of view of the camera when the camera is rotated.

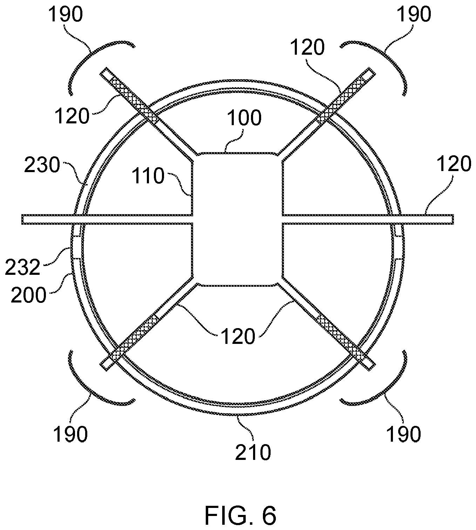

FIG 6 illustrates an example of a UAV 100, as previously described, in which peripheral bumpers 190 have been attached at extremities of the arms 120. The peripheral bumpers 190 provide mechanical guides when maneuvering the UAV 100 after it has landed.

In some examples, the UAV 100 may additionally comprise roll bars to protect the rotors and/or payload 150.

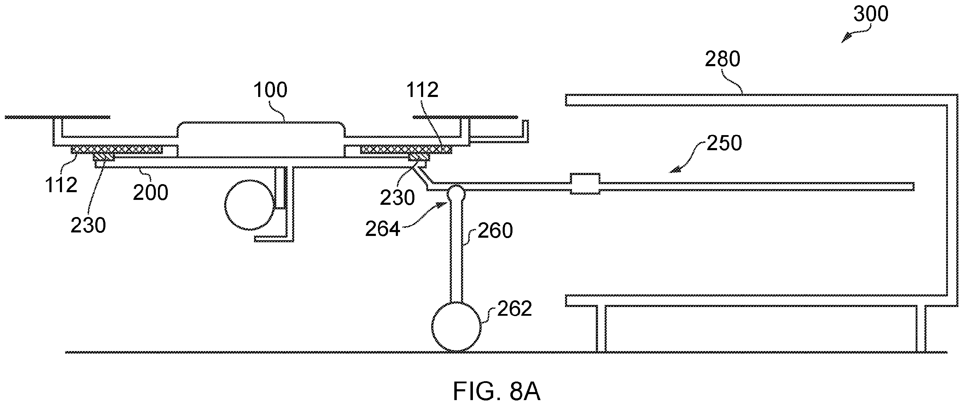

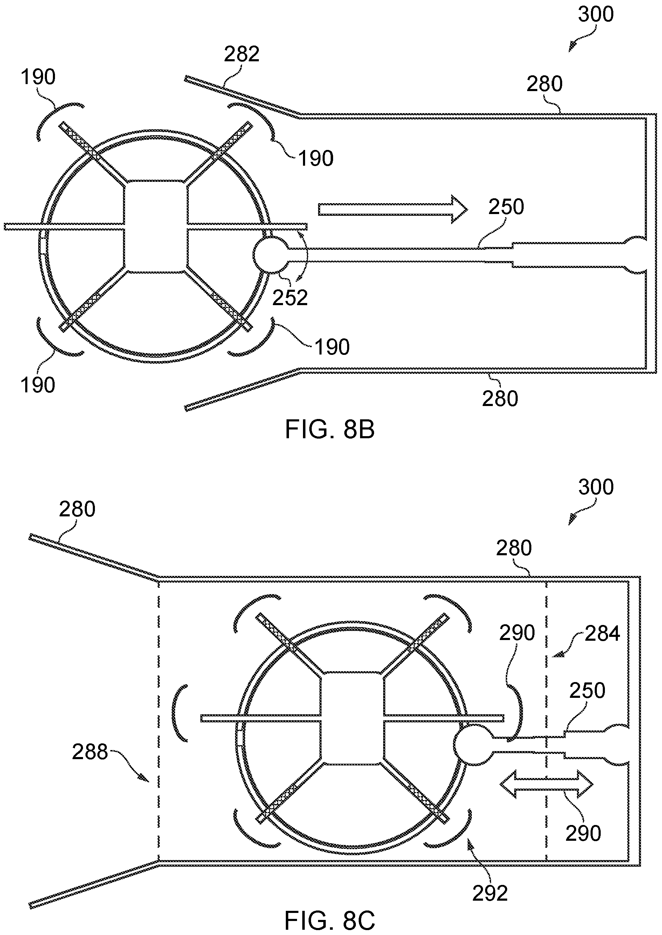

FIGS 7A, 7B, 8A, 8B, 8C illustrate a system 300 comprising a UAV 100 as previously described and a charging platform 200 as previously described.

The UAV 100 comprises: an electrical propulsion system 102 for landing the UAV 100 on a charging platform 200 that is smaller than the UAV 100; a battery 104 for powering the electrical propulsion system 102; charging circuitry 106 for charging the battery 104; a housing 110 comprising a first plurality of arms 120 extended outwardly from the housing 110 for supporting the UAV 100 on the charging platform 200, wherein the charging circuitry 106 is configured to be charged using at least some of a plurality of contact charging pads 112, and wherein at least some of the plurality of contact charging pads 112 are positioned on at least some of the plurality of arms 120 that extend over at least an underside portion 122 of those arms 120.

The charging platform 200 for at least the unmanned aerial vehicle 100 is smaller than the UAV 100 and comprises: a horizontal frame 210, bounding an interior void 220, configured to support the outwardly extending arms 120 of the UAV 100 that has landed on the charging platform 200; and a second plurality of contact charging pads 230 for enabling charging of the UAV 100, wherein each of the second plurality of contact charging pads 230 is positioned on the frame 210 and extends over at least an upper portion 212 of the charging frame 210.

The contact charging pads 112 are sized and positioned, in some examples, to form discreet portions in the yaw direction, in the horizontal, and to form extended portions orthogonal to the yaw direction, in the horizontal. The corresponding contact charging pads 230 are sized and positioned to form extended portions in the yaw direction, in the horizontal, and to form discrete portions orthogonal to the yaw direction, in the horizontal. The contact charging pads 112 and the contact charging pads 230 are complimentary- for a direction in which one is discreet and narrow (e.g. maximum dimension A) the other is many times longer (e.g. maximum dimension > 5*A). This creates landing tolerance. There is therefore at least one direction in which the maximum dimension of one is at least five times greater than the maximum dimension of the other. In the example illustrated there is a one direction in which the maximum dimension of a contact charging pad 112 is at least five times greater than the maximum dimension of the contact pad 230 and another direction, orthogonal to the first direction in which the maximum dimension of a contact charging pad 230 is at least five times greater than the maximum dimension of the contact pad 112.

As illustrated in FIGs 8A-8C, the frame 210 of the charging platform 200 is moveable with respect to an enclosure 280 using an extendable/retractable arm 250. As illustrated in FIG 8A, the frame 210 is supported via a support strut 260 that makes contact with the ground via a wheel 262. The strut 260 is rotatable about a pivot joint 264 so that it folds upwardly automatically on retraction of the arm 250 and folds downwardly automatically on extension of the arm 250. As can be seen from FIG 8A, as the arm 250 retracts, the rotatable strut 260 makes contact with a floor of the enclosure 280 and is rotated clockwise about the rotatable joint 264 as the arm 250 continues to retract. The rotatable strut 260 and wheel 262 will rotate and fold underneath the frame 210 of the charging platform 200 as the UAV 100 is moved into the enclosure 280. When the arm 250 is extended, moving the UAV 100 out of the enclosure 280, the rotatable strut 260 and wheel 262 rotate about the rotatable joint 264 and the force of gravity to provide a support for the frame 210 of the charging platform 200. It will be appreciated from FIG 8A, that the height of the enclosure 280 is small and that the contractible support 260 helps keep the enclosure 280 small.

In the example of FIG 8B, the arm 250 is retracting and pulling the charging platform 200 supporting the UAV 100 into the enclosure 280. In this example, the enclosure 280 has a fluted opening 282 that makes contact with the peripheral bumpers 190 of the UAV 100 applying a repositioning force to the UAV 100. In some examples, this may reposition the UAV 100 with respect to the charging platform 200. In other examples, the frame 210 of the charging platform 200 is connected to the arm 250 via a rotatable joint 252 and the repositioning force causes rotation of the frame 210 of the charging platform 200 about the rotatable joint 252 in the horizontal plane. It will be appreciated from FIG 8B, that the width of the enclosure 280 is only slightly greater than the width of the UAV 100. This enables the enclosure 280 to be small.

In the example illustrated in FIG 8C, the enclosure 280 has an internal barrier 284 against which the peripheral bumpers 290 contact. This positions the UAV 100 lengthwise with respect to the enclosure 280. The fluted openings 282 of the enclosure 280 may be hinged doors that are then closed to form a closure 288 of the enclosure 280.

In some examples, the arm 250 may be configured to perform a reciprocal motion 290. This reciprocal motion may be used to reposition the UAV 100 with respect to the charging platform 200 and at the same time cause friction between the contact charging pads 112 of the UAV 100 and the contact charging pads 230 of the charging platform 200. This friction may improve the electrical connection between the respective charging pads. The contact charging pads 112 of the UAV 100 and/or the contact charging pads 230 of the charging platform 200 may be configured to have abrasive surfaces. In some but not necessarily all examples, there may be a rotation of the frame 210 of the charging platform relative to the UAV 100 to clean the contact between the contact charging pads 112 of the UAV 100 and the contact charging pads of the charging platform 200.

In some, but not necessarily all, examples, the plurality of contact charging pads 112 of the UAV 100 are spatially arranged and the plurality of contact charging pads 230 of the charging platform 200 are spatially arranged so that, whatever orientation, in the horizontal, the UAV 100 has in landing, at least a first one of the plurality of contact charging pads 112 at an arm 120 of the UAV 100 contacts one of the plurality of contact charging pads 230 of the charging platform 200 and at least a second, different, one of the plurality of contact charging pads 112 at a different arm 120 of the UAV 100 contacts a different one of the second plurality of contact charging pads 230 of the charging platform 200.

In some, but not necessarily all examples, a width of the UAV contact charging pad 112 in the circumferential direction is less than a gap 232 between adjacent ones of the second plurality of contact charging pads 230 of the charging platform 200 so that a contact charging pad 112 of the UAV 100 cannot bridge the gap 232.

It will be appreciated that in at least some examples, that the plurality of contact charging pads 230 of the charging platform 200 extend in the yaw direction, as segments of a circle, with narrow gaps therebetween and the plurality of contact charging pads 112 of the UAV 100 extend radially, in a direction substantially orthogonal to the circumferential extent of the contact charging pads 230 of the charging platform 200, in an outward direction.

In some, but not necessarily all, examples, an air-fillable support tube may be placed adjacent to and to an exterior of the frame 210 of the charging platform 200. The tube is inflated before landing of the UAV 100 and air is expelled from the tube when contact is made between the UAV 100 and the tube. This facilitates a damped landing for the UAV 100.

In some but not necessarily all examples, there may be a conveyor belt configured to move the UAV 100 off the charging platform 200.

It should be appreciated that, in the examples described, the battery 104 of the UAV 100 is recharged and is not replaced.

It should be appreciated that, in the examples described, physical contact is made between contact charging pads 112 of the UAV 100 and contact charging pads 230 of the charging platform 200. This physical contact enables a direct electrical current to pass between the contacting contact charging pads 112, 230.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

Where a structural feature has been described, it may be replaced by means for performing one or more of the functions of the structural feature whether that function or those functions are explicitly or implicitly described.

Where a means has been described, it may be replaced by a concrete, structural element or arrangement configured to perform the function of the means whether that element is explicitly or implicitly described. The element or arrangement may, in some examples, comprise circuitry.

In some but not necessarily all examples, the apparatus 100 is configured to communicate data from the apparatus 100 with or without local storage of the data in a memory at the apparatus 100 and with or without local processing of the data by circuitry or processors at the apparatus 100.

The data may, for example, be measurement data or data produced by the processing of measurement data.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long range cellular radio links. The apparatus may comprise a communications interface such as, for example, a radio transceiver for communication of data.

The apparatus 100 may be part of the Internet of Things forming part of a larger, distributed network.

The processing of the data, whether local or remote, may be for the purpose of health monitoring, data aggregation, patient monitoring, vital signs monitoring or other purposes.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 100 where it may produce an output sensible to the subject such as an audio output, visual output or haptic output.

The recording of data may comprise only temporary recording, or it may comprise permanent recording or it may comprise both temporary recording and permanent recording, Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or overwritten, although long-term storage may or may not occur. The use of the term 'capture' in relation to an image relates to temporary recording of the data of the image. The use of the term 'store' in relation to an image relates to permanent recording of the data of the image.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

The above described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

## Claims

1. An unmanned aerial vehicle (UAV) (100) comprising:
an electrical propulsion system (102), comprising rotors (103);
a battery (104) for powering the electrical propulsion system (102);
charging circuitry (106) for charging the battery (104);
a housing (110) comprising a first plurality of arms (120) extending outwardly from the housing (110) for supporting the UAV (100) on a charging platform (200) that is smaller than the UAV (100),
wherein the charging circuitry (106) is configured to be charged using at least some of a plurality of contact charging pads (112), and wherein at least some of the plurality of contact charging pads (112) are positioned on at least some of the first plurality of arms (120) and
extend over at least an underside portion (122) of those arms (120), **characterised in that** the rotors (103) of the electrical propulsion system (102) are attached at the extremities of the arms (120).

2. An unmanned aerial vehicle (100) as claimed in claim 1, wherein a span of the first plurality of arms (120) exceeds a span of the charging platform (200).

3. An unmanned aerial vehicle (100) as claimed in any preceding claim, wherein each of the plurality of contact charging pads (112) is positioned on one of the first plurality of arms (120) and extends over at least an underside portion (122) of that arm (120), such that all contact charging pads of the unmanned aerial vehicle are positioned on the first plurality of arms (120).

4. An unmanned aerial vehicle (100) as claimed in any preceding claim, wherein the contact charging pads (112) are sized and positioned to form discreet portions of a virtual anulus (130), wherein inner portions (114) of the contact charging pads (112) are located at an inner radius of the virtual anulus (130) and outer portions (116) of the contact charging pads (112) are located at an outer radius of the virtual anulus (130).

5. An unmanned aerial vehicle (100) as claimed in claim 4, wherein the inner radius of the virtual anulus (130) is less than a radius of the charging platform (200) and the outer radius of the virtual anulus (130) is greater than the radius of the charging platform (200).

6. An unmanned aerial vehicle as claimed in any preceding claim, wherein the contact charging pads (112) are configured to have an abrasive surface.

7. An unmanned aerial vehicle as claimed in any preceding claim comprising means for detecting a relationship between the UAV (100) and the charging platform (200) that is sub-optimal for charging, and means for causing a change in the relationship between the UAV and the charging platform to enable optimal charging.

8. An unmanned aerial vehicle as claimed in any preceding claim, wherein the UAV comprises a portion (170, 180) that extends below the contact charging pads (112), closer to ground, when the UAV is on the charging platform, wherein the portion (170, 180) is configured to prevent the UAV sliding off the charging platform.

9. An unmanned aerial vehicle as claimed in claim 8, wherein the portion that extends below the charging pads is funnel-shaped to control a position of the UAV relative to the charging platform, when the portion abuts the charging platform while being received within a void of the charging platform.

10. An unmanned aerial vehicle as claimed in claim 8, wherein the portion that extends below the charging pads (112) is a moveable payload protector (180), configured to rotate in the horizontal about the payload.

11. An unmanned aerial vehicle as claimed in any preceding claim, comprising peripheral bumpers (190) at extremities of the arms (120).

12. A system comprising:
the unmanned aerial vehicle (UAV) (100) of claim 1 and
a charging platform (200) for at least the unmanned aerial vehicle (100), the charging platform (200) being smaller than the UAV and comprising:
a horizontal frame, bounding an interior void, configured to support outwardly extending arms of a UAV that has landed on the charging platform;
a second plurality of contact charging pads (230) for enabling charging of the UAV (100), wherein each of the second plurality of contact charging pads (230) is positioned on the frame and extends over at least an upper portion of the charging frame.

## Patentansprüche

1. Unbemanntes Luftfahrzeug (UAV) (100), das Folgendes umfasst:
ein elektrisches Antriebssystem (102), das Rotoren (103) umfasst;
eine Batterie (104) zum Versorgen des elektrischen Antriebssystems (102) mit Strom;
eine Ladeschaltung (106) zum Laden der Batterie (104);
ein Gehäuse (110), das eine erste Vielzahl von Armen (120) umfasst, die sich zum Stützen des UAV (100) auf einer Ladeplattform (200), die kleiner ist als das UAV (100), vom Gehäuse (110) nach außen erstrecken,
wobei die Ladeschaltung (106) dazu ausgelegt ist, unter Verwendung von mindestens einigen einer Vielzahl von Kontaktladepads (112) geladen zu werden, und wobei mindestens einige der Vielzahl von Kontaktladepads (112) auf mindestens einigen der ersten Vielzahl von Armen (120) positioniert sind und sich über mindestens einen Unterseitenabschnitt (122) dieser Arme (120) erstrecken, **dadurch gekennzeichnet, dass** die Rotoren (103) des elektrischen Antriebssystems (102) an den Endpunkten der Arme (120) befestigt sind.

2. Unbemanntes Luftfahrzeug (100) nach Anspruch 1, wobei eine Spannweite der ersten Vielzahl von Armen (120) eine Spannweite der Ladeplattform (200) überschreitet.

3. Unbemanntes Luftfahrzeug (100) nach einem der vorhergehenden Ansprüche, wobei jedes der Vielzahl von Kontaktladepads (112) auf einem der ersten Vielzahl von Armen (120) positioniert ist und sich über mindestens einen Unterseitenabschnitt (122) dieses Arms (120) erstreckt, derart, dass alle Kontaktladepads des unbemannten Luftfahrzeugs auf der ersten Vielzahl von Armen (120) positioniert sind.

4. Unbemanntes Luftfahrzeug (100) nach einem der vorhergehenden Ansprüche, wobei die Kontaktladepads (112) dimensioniert und positioniert sind, um diskrete Abschnitte eines virtuellen Annulus (130) zu bilden, wobei sich Innenabschnitte (114) der Kontaktladepads (112) an einem Innenradius des virtuellen Annulus (130) befinden und sich Außenabschnitte (116) der Kontaktladepads (112) an einem Außenradius des virtuellen Annulus (130) befinden.

5. Unbemanntes Luftfahrzeug (100) nach Anspruch 4, wobei der Innenradius des virtuellen Annulus (130) kleiner ist als ein Radius der Ladeplattform (200) und der Außenradius des virtuellen Annulus (130) größer ist als der Radius der Ladeplattform (200).

6. Unbemanntes Luftfahrzeug nach einem der vorhergehenden Ansprüche, wobei die Kontaktladepads (112) dazu ausgelegt sind, eine abrasive Fläche aufzuweisen.

7. Unbemanntes Luftfahrzeug nach einem der vorhergehenden Ansprüche, das Mittel zum Detektieren einer Beziehung zwischen dem UAV (100) und der Ladeplattform (200), die zum Laden suboptimal ist, und Mittel zum Bewirken einer Änderung in der Beziehung zwischen dem UAV und der Ladeplattform, um ein optimales Laden zu ermöglichen, umfasst.

8. Unbemanntes Luftfahrzeug nach einem der vorhergehenden Ansprüche, wobei das UAV einen Abschnitt (170, 180) umfasst, der sich unter die Kontaktladepads (112) näher am Boden erstreckt, wenn sich das UAV auf der Ladeplattform befindet, wobei der Abschnitt (170, 180) dazu ausgelegt ist zu verhindern, dass das UAV von der Ladeplattform rutscht.

9. Unbemanntes Luftfahrzeug nach Anspruch 8, wobei der Abschnitt, der sich unter die Ladepads erstreckt, trichterförmig ist, um eine Position des UAV relativ zur Ladeplattform zu steuern, wenn der Abschnitt an der Ladeplattform anliegt, während er in einem Hohlraum der Ladeplattform aufgenommen ist.

10. Unbemanntes Luftfahrzeug nach Anspruch 8, wobei der Abschnitt, der sich unter die Ladepads (112) erstreckt, ein bewegbarer Nutzlastschutz (180) ist, der dazu ausgelegt ist, horizontal um die Nutzlast zu rotieren.

11. Unbemanntes Luftfahrzeug nach einem der vorhergehenden Ansprüche, das an Endpunkten der Arme (120) periphere Stoßdämpfer (190) umfasst.

12. System, das Folgendes umfasst:
das unbemannte Luftfahrzeug (UAV) (100) von Anspruch 1, und
eine Ladeplattform (200) für mindestens das unbemannte Luftfahrzeug (100), wobei die Ladeplattform (200) kleiner ist als das UAV und Folgendes umfasst:
einen horizontalen Rahmen, der an einen inneren Hohlraum grenzt und dazu ausgelegt ist, sich nach außen erstreckende Arme des UAV, das auf der Ladeplattform gelandet ist, zu stützen;
eine zweite Vielzahl von Kontaktladepads (230), um das Laden des UAV (100) zu ermöglichen, wobei jedes der zweiten Vielzahl von Kontaktladepads (230) auf dem Rahmen positioniert ist und sich über mindestens einen oberen Abschnitt des Laderahmens erstreckt.

## Revendications

1. Véhicule aérien sans pilote (UAV) (100) comprenant :
un système de propulsion électrique (102), comprenant des rotors (103) ;
une batterie (104) pour alimenter le système de propulsion électrique (102) ;
circuit de charge (106) pour charger la batterie (104) ;
un boîtier (110) comprenant une première pluralité de bras (120) s'étendant vers l'extérieur à partir du boîtier (110) pour supporter l'UAV (100) sur une plateforme de charge (200) qui est plus petite que l'UAV (100),
dans lequel le circuit de charge (106) est configuré pour être chargé à l'aide d'au moins certains d'une pluralité de plots de charge de contact (112), et dans lequel au moins certains de la pluralité de plots de charge de contact (112) sont positionnés sur au moins certains de la première pluralité de bras (120) et s'étendent sur au moins une partie inférieure (122) de ces bras (120), **caractérisé en ce que** les rotors (103) du système de propulsion électrique (102) sont attachés aux extrémités des bras (120).

2. Véhicule aérien sans pilote (100) selon la revendication 1, dans lequel une envergure de la première pluralité de bras (120) dépasse une envergure de la plateforme de charge (200).

3. Véhicule aérien sans pilote (100) selon l'une quelconque des revendications précédentes, dans lequel chacun de la pluralité de plots de charge de contact (112) est positionné sur un de la première pluralité de bras (120) et s'étend sur au moins une partie inférieure (122) de ce bras (120), de sorte que tous les plots de charge de contact du véhicule aérien sans pilote soient positionnés sur la première pluralité de bras (120).

4. Véhicule aérien sans pilote (100) selon l'une quelconque des revendications précédentes, dans lequel les plots de charge de contact (112) sont dimensionnés et positionnés pour former des parties discrètes d'un anneau virtuel (130), dans lequel des parties intérieures (114) des plots de charge de contact (112) sont situées dans un rayon intérieur de l'anneau virtuel (130), et des parties extérieures (116) des plots de charge de contact (112) sont situées dans un rayon extérieur de l'anneau virtuel (130).

5. Véhicule aérien sans pilote (100) selon la revendication 4, dans lequel le rayon intérieur de l'anneau virtuel (130) est inférieur à un rayon de la plateforme de charge (200), et le rayon extérieur de l'anneau virtuel (130) est supérieur au rayon de la plateforme de charge (200).

6. Véhicule aérien sans pilote selon l'une quelconque des revendications précédentes, dans lequel les plots de charge de contact (112) sont configurés pour avoir une surface abrasive.

7. Véhicule aérien sans pilote selon l'une quelconque des revendications précédentes, comprenant des moyens pour détecter une relation entre l'UAV (100) et la plateforme de charge (200) qui est sous-optimale pour la charge, et des moyens pour provoquer une modification de la relation entre l'UAV et la plateforme de charge afin de permettre une charge optimale.

8. Véhicule aérien sans pilote selon l'une quelconque des revendications précédentes, dans lequel l'UAV comprend une partie (170, 180) qui s'étend sous les plots de charge de contact (112), plus près du sol, lorsque l'UAV est sur la plateforme de charge, dans lequel la partie (170, 180) est configurée pour empêcher l'UAV de glisser de la plateforme de charge.

9. Véhicule aérien sans pilote selon la revendication 8, dans lequel la partie qui s'étend sous les plots de charge est en forme d'entonnoir pour commander une position de l'UAV par rapport à la plateforme de charge, lorsque la partie vient en butée contre la plateforme de charge tout en étant reçue à l'intérieur d'un vide de la plateforme de charge.

10. Véhicule aérien sans pilote selon la revendication 8, dans lequel la partie qui s'étend sous les plots de charge (112) est un protecteur de charge utile mobile (180), configuré pour tourner à l'horizontale autour de la charge utile.

11. Véhicule aérien sans pilote selon l'une quelconque des revendications précédentes, comprenant des amortisseurs périphériques (190) aux extrémités des bras (120).

12. Système comprenant :
le véhicule aérien sans pilote (UAV) (100) de la revendication 1 et
une plateforme de charge (200) pour au moins le véhicule aérien sans pilote (100), la plateforme de charge (200) étant plus petite que l'UAV et comprenant :
un cadre horizontal délimitant un vide intérieur, configuré pour supporter des bras s'étendant vers l'extérieur d'un UAV qui a atterri sur la plateforme de charge ;
une deuxième pluralité de plots de charge de contact (230) pour permettre la charge de l'UAV (100), dans lequel chacun de la deuxième pluralité de plots de charge de contact (230) est positionné sur le cadre et s'étend sur au moins une partie supérieure du cadre de charge.
